# EUROPÄISCHE PATENTSCHRIFT

(11) **EP 1 230 744 B1**
(45) Veröffentlichungstag und Bekanntmachung des Hinweises auf die Patenterteilung: **08.06.2005**
(21) Anmeldenummer: 00976045.5
(22) Anmeldetag: 17.11.2000
(51) Int. Cl.: H04B 3/23

(54) **VORRICHTUNG ZUR ECHOKOMPENSATION BEI GLEICHLAGE-ÜBERTRAGUNGSVERFAHREN IM DUPLEX-BETRIEB ÜBER EINE ZWEIDRAHTLEITUNG**
DEVICE FOR ECHO COMPENSATION IN A TWO-WIRE FULL DUPLEX CHANNEL TRANSMISSION METHOD
DISPOSITIF DE COMPENSATION D'ECHO DANS DES PROCEDES DE TRANSMISSION DUPLEX SUR UNE LIGNE A DEUX FILS

(30) Priorität: 18.11.1999 DE 19955596
(43) Veröffentlichungstag der Anmeldung: 14.08.2002
(73) Patentinhaber: Infineon Technologies AG, 81669 München (DE)
(72) Erfinder: STRÄUSSNIGG, Dietmar, A-9500 Villach (AT)
(74) Vertreter: Reinhard - Skuhra - Weise & Partner
(86) Internationale Anmeldenummer: PCT/EP2000/011478
(87) Internationale Veröffentlichungsnummer: WO 2001/037444

(56) Entgegenhaltungen:
- EP-A- 0 347 394
- EP-A- 0 384 490

## Beschreibung

Die vorliegende Erfindung betrifft eine Vorrichtung zur Echokompensation bei Gleichlage-Übertragungsverfahren im Duplex-Betrieb über eine Zweidrahtleitung.

Die EP-A-0 384 490 beschreibt eine Echokompensationsvorrichtung, die FIR- und IIR-Filter enthält. Die Echokompensationsvorrichtung weist eine Brechungseinrichtung zur Berechnung der Filterkoeffizienten des IIR-Filters in Abhängigkeit von den Filterkoeffizienten des FIR-Filters und einer Einstellungseinrichtung zur Einstellung des IIR-Filters auf.

Die EP-A-0347394 beschreibt ein adaptives digitales Filter mit einem nichtrekursivem und einem rekursivem Schaltungsteil.

Bei der Duplex-Datenübertragung über eine Zweidrahtleitung, d.h. bei gleichzeitiger Übertragung in beide Richtungen (Up- und Downstream) treten an den jeweiligen Empfängereingängen sowohl das von der gegenüberliegenden Station herrührende Nutzsignal als auch vom eigenen Sender resultierende Echos auf.

Während bei Frequenzgetrenntlage-Übertragungsverfahren die störenden Echos durch selektive Filter unterdrückt werden können, sind bei Gleichlage-Übertragungsverfahren spezielle Einrichtungen zur Echokompensation erforderlich.

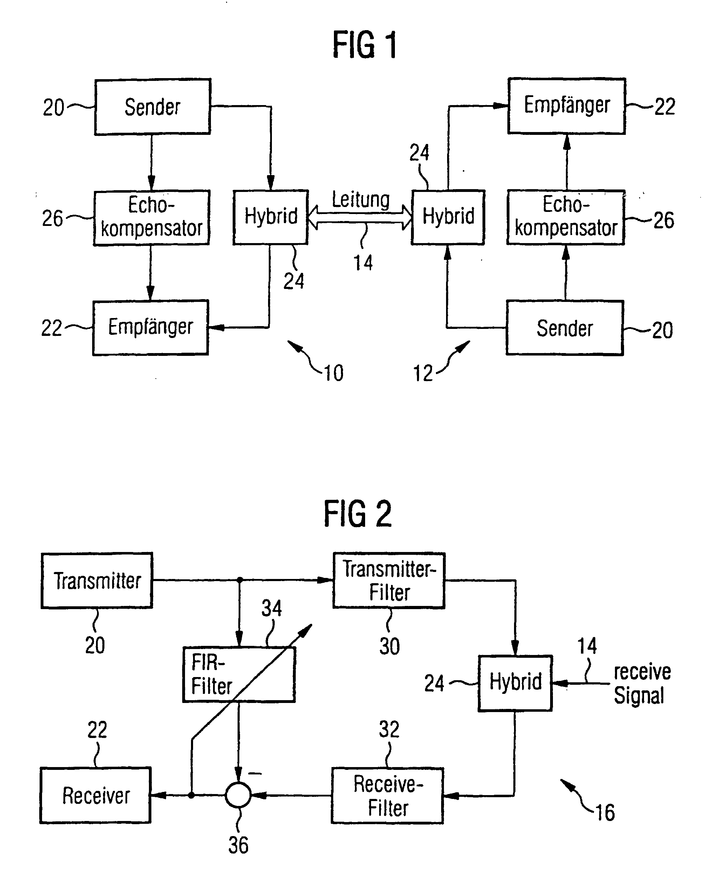

Gemäß dem Stand der Technik wurden Übertragungssysteme mit Echokompensation mit einer prinzipiellen Anordnung wie hier in Fig. 1 dargestellt, ausgeführt. Da die auftretenden Echos sehr stark von der analogen Beschaltung und den Parametern der verwendeten Leitung abhängen, ist im allgemeinen eine adaptive Einstellung des Echokompensators erforderlich.

Gemäß dem Stand der Technik wird diese Echokompensation durch die Nachbildung der Echoimpulsantwort mittels eines FIR-Filters bewerkstelligt. Als FIR-Filter werden Filter mit finiter Impulsantwort (Finite impulse response), also nicht rekursive Filter bezeichnet. Die Faltung des Sendesignals mit der Echoimpulsantwort ergibt dann das zu kompensierende Echo. Das FIR-Filter kann wahlweise fest oder adaptiv verstellbar ausgeführt sein. Für die Adaption wird wegen der einfachen Implementierbarkeit bevorzugt der Gradienten-Algorithmus verwendet. Dieser ist beispielsweise in dem Lehrbuch "Digital filters - Analysis, Design and Applications" von Andreas Antoniou (ISBN 0-07-002121-X) auf den Seiten 625 bis 634 beschrieben. Die Länge der Echoimpulsantwort bestimmt dabei die erforderliche Anzahl der Koeffizienten des FIR-Filters.

Gemäß dem Stand der Technik entstehen dadurch bei entsprechend langen Echoimpulsantworten sehr viele Koeffizienten des FIR-Filters. Dadurch wird die Adaption des Filters sehr träge und es ergibt sich ein sehr schlechtes Konvergenzverhalten des Filters.

Es ist daher Aufgabe der vorliegenden Erfindung, eine Vorrichtung zur Echokompensation bei Gleichlage-Übertragungsverfahren im Duplex-Betrieb über eine Zweidrahtleitung zu schaffen, bei der keine derart "langen" also koeffizientenreichen FIR-Filter verwendet werden und die ein wesentlich besseres Konvergenzverhalten insbesondere bei einer Datenübertragung mit stark unterschiedlichen Datenüber tragungsraten in Sende- und Empfangsrichtung aufweist.

Erfindungsgemäß wird diese Aufgabe dadurch gelöst, dass zusätzlich zu dem Echokompensationsfilter mit einstellbaren Koeffizienten, welches als FIR-Filter gestaltet ist, und zwischen Senderausgang und Empfängereingang angeordnet ist, ein IIR-Filter, also ein Filter mit unbegrenzter Impulsantwort (Infinite impulse response), also ein rekursives Filter, mit einstellbaren Koeffizienten vorgesehen ist.

Es ist dabei eine Vorrichtung zur Einstellung der Koeffizienten des IIR-Filters in Abhängigkeit von den Koeffizienten des FIR-Filters vorgesehen. Auf diese Weise können Konvergenzprobleme, die bei der Adaption eines rekursiven (IIR)-Filters mittels Gradientenalgorithmus auftreten, vermieden werden.

Die Koeffizienten des FIR-Filters sind in Abhängigkeit von dem Empfangssignal und dem Ausgangssignal des FIR-Filters einstellbar. Auf diese Weise ergibt sich eine bestmögliche Konvergenz.

Der Senderausgang ist mit dem FIR-Filter verbunden, dessen Ausgang mit dem negativen Eingang eines Summationspunktes verbunden ist, dessen positiver Eingang mit dem Empfangssignal verbunden ist, und wobei ein weiterer Ausgang des FIR-Filters mit dem Eingang des IIR-Filters verbunden ist, dessen Ausgang mit dem negativen Eingang eines weiteren Summationspunktes verbunden ist, dessen positiver Eingang mit dem Ausgang des ersten Summationspunktes und dessen Ausgang mit dem Empfänger verbunden ist.

Ein zusätzliches FIR-Filter ist vorgesehen. Auf diese Weise lässt sich die Echoimpulsantwort besonders günstig durch die Serienschaltung zweier verkürzter FIR- und eines IIR-Filters niedriger Ordnung nachbilden.

Das zusätzliche FIR-Filter ist zwischen dem Ausgang des ersten FIR-Filters und dem negativen Eingang des ersten Summationspunktes angeordnet.

Bei der Datenübertragung mit stark unterschiedlichen Datenraten in Sende- und Empfangsrichtung sind bei in Senderichtung hoher und in Empfangsrichtung niedriger Datenrate zwischen den beiden FIR-Filtern und nach dem Ausgang des IIR-Filters jeweils Dezimationsvorrichtungen angeordnet.

Bei der Datenübertragung mit stark unterschiedlichen Datenraten in Sende- und Empfangsrichtung ist es bei in Senderichtung niedriger und in Empfangsrichtung hoher Datenrate zwischen dem Sender und dem ersten FIR-Filter eine Interpolationsvorrichtung, zwischen dem ersten und dem zweiten FIR-Filter eine Dezimationsvorrichtung und am Ausgang des zweiten FIR-Filters eine Interpolationsvorrichtung angeordnet.

Die vorliegende Erfindung wird im folgenden anhand der in den beigefügten Zeichnungen dargestellten Ausführungsbeispiele näher erläutert. Es zeigen:
Fig. 1 den grundlegenden Aufbau eines Duplex-Übertragungssystems mit Echokompensator gemäß dem Stand der Technik;
Fig. 2 den Aufbau einer Endstelle eines Duplex-Übertragungssystems mit Echokompensation durch FIR-Filter mit einstellbaren Koeffizienten gemäß dem Stand der Technik;
Fig. 3 eine Endstelle mit Filterung zur Echokompensation;
Fig. 4 ein Ausführungsbeispiel für die erfindungsgemäße Filteranordnung;
Fig. 5 eine erfindungsgemäße Endstelle mit Echokompensation für das ADSL-System auf Teilnehmerseite;
Fig. 6 eine entsprechende erfindungsgemäße Endstelle für das ADSL-System auf Amtsseite.

Figur 1 zeigt die prinzipielle Anordnung eines Übertragungssystems mit Echokompensation gemäß dem Stand der Technik. Diese Anordnung dient dazu, die bei der Duplex-Datenübertragung über eine Zweidrahtleitung, d.h. bei gleichzeitiger Übertragung in beide Richtungen (Up- und Downstream) an den jeweiligen Empfängereingängen auftretenden Echos zu kompensieren. Bei Frequenz-Getrenntlage-Übertragungsverfahren könnten die störenden Echos durch selektive Filter unterdrückt werden. Bei Gleichlage-Übertragungsverfahren wie im vorliegenden Fall ist dies nicht möglich, und es sind spezielle Einrichtungen zur Echokompensation erforderlich.

Fig. 1 zeigt also die Verbindung zwischen zwei Teilnehmern eines Duplex-Datenübertragungssystems, welches Gleichlage-Übertragungsverfahren über eine Zweidrahtleitung bewirkt.

Zwei Teilnehmer 10, 12 sind über eine Zweidrahtleitung 14 verbunden. Anstelle eines der Teilnehmer 10, 12 kann natürlich auch eine Vermittlungsstelle, ein Daten-Netzknoten oder ähnliches treten. Jeder der Teilnehmer 10, 12 umfaßt einen Sender 20 und einen Empfänger 22. Wie in der Telefontechnik üblich, ist zur Übertragung der Signale in beide Richtungen über eine einzige Zweidrahtleitung 14 jeweils eine Gabelschaltung (Hybrid) 24 erforderlich. Zur Unterdrückung der entstehenden lokalen Echos ist jeweils zwischen Sender 20 und Empfänger 22 ein Echokompensator 26 angeordnet.

Da die auftretenden Echos sehr stark von der analogen Beschaltung und den Parametern der verwendeten Leitung abhängen, ist im allgemeinen eine adaptive Einstellung des Echokompensators erforderlich. Dieses ist in Fig. 2 näher erläutert. Die Fig. 2 zeigt lediglich einen Teilnehmer mit einer Echokompensation durch FIR-Filter (Filter mit endlicher Impulsantwort=finit impulse response), also einem nicht rekursiven Filter mit adaptiv einstellbaren Koeffizienten. Die Fig. 2 stellt gleichzeitig den Stand der Technik dar, von dem die vorliegende Erfindung ausgeht.

Auch der Teilnehmer 16 gemäß Fig. 2 umfaßt einen Sender 20, einen Empfänger 22 und eine Gabelschaltung (Hybrid) 24, an der die Zweidrahtleitung 14 zum Netz abgeht. Zusätzlich ist hier ein Sendefilter (Transmitter filter) 30 und ein Empfangsfilter (Receive filter) 32 zwischen Sender 20 und Hybrid 24 bzw. zwischen Empfänger 22 und Hybrid 24 angeordnet. Als Echokompensator dient hier ein FIR-Filter 34, dessen Koeffizienten in Abhängigkeit von dem am Empfänger 22 ankommenden Signal einstellbar sind. Dieses FIR-Filter 34 ist mit seinem Eingang mit dem Ausgang des Senders 20 und mit seinem Ausgang mit dem negativen Eingang eines Summationspunktes 36 verbunden, dessen anderer Eingang mit dem Ausgang des Empfangsfilters 32, und dessen Ausgang mit dem Eingang des Empfängers 22 verbunden ist.

Auf diese Weise wird das durch den FIR-Filter 34 mit adaptiven Koeffizienten gefilterte Signal des Senders 20 von dem über das Empfangsfilter 32 geleiteten Empfangssignal abgezogen. Auf diese Weise kann theoretisch das entstehende lokale Echo vollständig unterdrückt werden, wenn die Echoimpulsantwort von dem FIR-Filter 34 perfekt nachgebildet werden kann.

Die Echokompensation wird also durch die Nachbildung der - Echoimpulsantwort mittels des FIR-Filter 34 bewerkstelligt. Die Faltung des Sendesignals des Senders 20 mit der durch den FIR-Filter 34 nachgebildeten Echoimpulsantwort ergibt das zu kompensierende Echo. Gemäß dem Stand der Technik kann das FIR-Filter 34 wahlweise fest oder adaptiv verstellbar ausgeführt werden. Für die Adaption wird wegen der einfacheren Implementierbarkeit bevorzugt der Gradientenalgorithmus verwendet, wie er beispielsweise in dem Lehrbuch "Digital Filters - Analysis, Design and Applications" von Andreas Antoniou (ISBN 0-07-002121-X) auf den Seiten 625 bis 634 dargestellt ist. Aus der Länge der Echoimpulsantwort ergibt sich die Anzahl der erforderlichen Koeffizienten des FIR-Filters. Dadurch entstehen häufig sehr lange (koeffizientenreiche) FIR-Filter. Bei diesen ist dann die Konvergenz der Adaption der Koeffizienten sehr langsam. Das Kovergenzverhalten ist ungünstig.

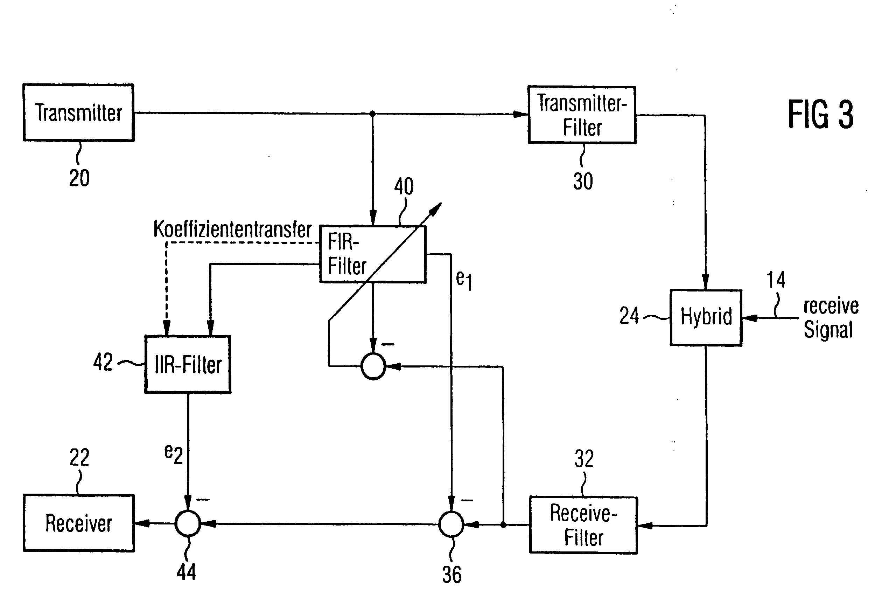

Figur 3 zeigt eine Echokompensationseinrichtung bei der ein kürzeres FIR-Filter 40 mit einstellbaren Koeffizienten verwendet wird. Die Koeffizienteneinstellung erfolgt dabei wie aus dem Stand der Technik bekannt, entweder analytisch oder iterativ, beispielsweise mit dem Gradientenalgorithmus.

Dem FIR-Filter 40 wird dann ein IIR-Filter 42 nachgeschaltet. Es handelt sich dabei um ein rekursives Filter, d.h. um ein Filter mit unbegrenzter Impulsantwort (Infinite impulse response).

Von der Verwendung eines solches rekursiven IIR-Filters wurde weitgehend abgesehen, da erhebliche Konvergenzprobleme bei der Adaption eines solchen Filters beispielsweise mittels des Gradientenalgorithmus auftreten.

Erfindungsgemäß werden daher die Koeffizienten des IIR-Filters 42 aus den Koeffizienten des FIR-Filters 40 bestimmt.

Bei der in Figur 3 gezeigten Echokompensationseinrichtung ist ein Sender (Transmitter) 20 und ein Empfänger (receiver) 22 vorgesehen. Das Signal vom Sender 20 gelangt über den Sendefilter (transmitter filter) 30 zu der Gabelschaltung (hybrid) 24, an der die Zweidrahtleitung 14 des Netzes beginnt. Über die Zweidrahtleitung 14 ankommende Signale werden einem Empfangsfilter (receive filter) 32 zugeführt, von dem sie nach Subtraktion der Echokompensationssignale dem Empfänger (receiver) 22 zugeführt werden.

Anstelle des konventionellen FIR-Filter 34 mit einstellbaren Koeffizienten der Fig. 2 ist jedoch hier eine andersartige Echokompensationsschaltung vorgesehen. Dabei wird das Signal vom Sender 20 zuerst ebenfalls einem FIR-Filter 40 mit einstellbaren Koeffizienten zugeführt. Dieses FIR-Filter kann jedoch bei gleicher Echokompensationsleistung erheblich kürzer aufgebaut werden. Die Koeffizientenbestimmung für dieses FIR-Filter 40 erfolgt wieder anhand der Differenz des Ausgangssignals des FIR-Filters 40 und des vom Empfangsfilter 32 gelieferten Empfangssignals.

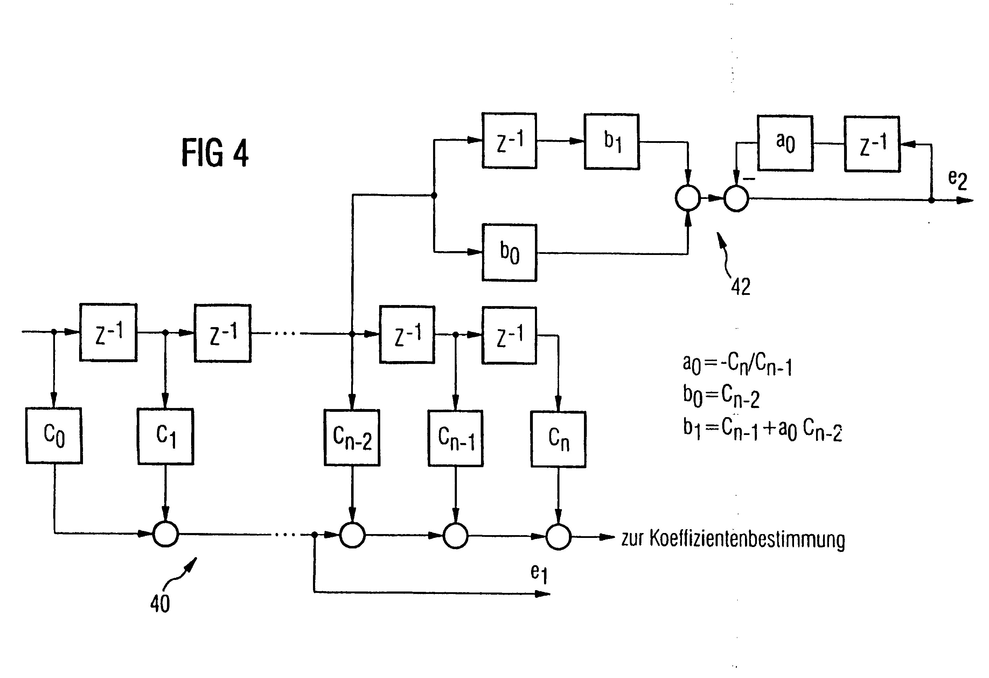

Zusätzlich wird aus dem FIR-Filter einige Stufen oberhalb des Filterausgangs, der zur Koeffizientenberechnung dient, ein Ausgangssignal e1 herausgeführt, welches auf einen negativen Eingang des Summationspunktes 36 geführt ist, dessen positiver Eingang mit dem Ausgang des Empfangsfilters 32 verbunden ist. Das Ausgangssignal des Summationspunktes 36 wird hier einem weiteren Summationspunkt 44 zugeführt, bevor es von dort den Empfänger 22 erreicht. Zusätzlich wird aus dem FIR-Filter 40 ein weiteres Ausgangssignal entnommen, welches dem Eingang eines rekursiven (IIR)-Filters 42 niedriger Ordnung zugeführt wird. Die Koeffizienten dieses IIR-Filters 42 werden aus den Koeffizienten des FIR-Filters 40 bestimmt. Die Art der Bestimmung wird weiter unten anhand der Fig. 4 erläutert. Das Ausgangssignal e2 des IIR-Filters 42 wird dem negativen Eingang des Summationspunktes 44 zugeführt.

Auf diese Weise wird die Echoimpulsantwort durch die Zusammenschaltung eines verkürzten FIR-Filters 40 und eines rekursiven IIR-Filters 42 niedriger Ordnung nachgebildet.

Auf diese Weise kann die erforderliche Echoimpulsantwort durch insgesamt kürzere Filter mit besserem Konvergenzverhalten nachgebildet werden.

Anhand der Figur 4 wird der Aufbau der Filter 40 und 42 im einzelnen dargestellt. Bei dem Filter 40 handelt es sich um einen üblichen nichtrekursiven FIR-Filter der Ordnung n, dessen Koeffizienten Cₒ bis Cₙ mit einem der üblichen Algorithmen analytisch oder iterativ anhand des Ausgangssignals Filters und des vom Empfangsfilter 32 stammenden Signals bestimmt werden.

Zur Echokompensation ist zwei Stufen vor dem Ende dieses Filters, also vor dem Summationspunkt an dem der mit dem Koeffizienten Cₙ₋₂ gewichtete Wert aufsummiert wird, das Signal des Filters als Ausgangssignal e1 herausgeführt. Gleichzeitig ist das Signal, welches auch der Multiplikation mit dem Koeffizienten Cₙ₋₂ zugeführt wird, herausgeführt. Dieses wird dem IIR-Filter 42 zugeführt. Die Koeffizienten a₀, b₀ und b₁ dieses IIR-Filters 42 werden aus den Koeffizienten der letzten Stufen des FIR-Filters 40, nämlich aus den Koeffizienten Cₙ₋₂, Cₙ₋₁ und Cₙ berechnet. Die entsprechende Berechnungsvorschrift ist ebenfalls in Fig. 4 angegeben. Die letzten Stufen des FIR-Filters 40 dienen also lediglich der Bestimmung entsprechender Koeffizienten Cₙ₋₂, Cₙ₋₁ und Cₙ, die sodann zur Berechnung der Koeffizienten des IIR-Filters 42 herangezogen werden.

Auf diese Weise lässt sich die Konvergenz der Echokompensation verbessern und es können insgesamt kürzere Filter Verwendung finden, ohne dass durch die Adaption des rekursiven Filters mittels Gradientenalgorithmus Konvergenzprobleme auftreten.

Erfindungsgemäß können weitere Vorteile erzielt werden, wenn eine Datenübertragung mit stark unterschiedlichen Datenraten in beiden Richtungen, wie beispielsweise beim ADSL-Verfahren, erfolgt. Bei unterschiedlichen Datenraten in beide Richtungen müssen nämlich entsprechende Dezimationen bzw. Interpolationen vorgenommen werden. Entsprechende Verfahren und Vorrichtungen zur Dezimation bzw. Interpolation sind im Stand der Technik beispielsweise aus dem Lehrbuch "Multirate Digital Signal Processing" von Ronald E. Crochiere und Lawrence R. Rabiner (ISBN: 0-13-605162-6) zu entnehmen.

Im Upstream-Receiver (beim Amt) wird das Sendesignal mit einer w-fach höheren Taktfrequenz gesendet als das Empfangssignal abgetastet wird. w kann dabei mit w=8 festgelegt werden. Hier wird nach einer Dezimierung am Ausgang des adaptiven Echokompensators das Echo rekonstruiert.

Im Downstream-Receiver (beim Teilnehmer) wird das Empfangssignal mit einer w-fach höheren Taktfrequenz abgetastet als das Sendesignal ausgesendet wird. Am Ausgang des Echokompensators muss daher das Echosignal mit der w-fachen Abtastfrequenz rekonstruiert werden. Dies kann mit einem nicht rekursiven Filter erfolgen, das w verschiedene Koeffizientensätze enthält (für jeden Abtastwert je Sendesymbol einen Koeffizientensatz). Dies entspricht einer Interpolationsstufe.

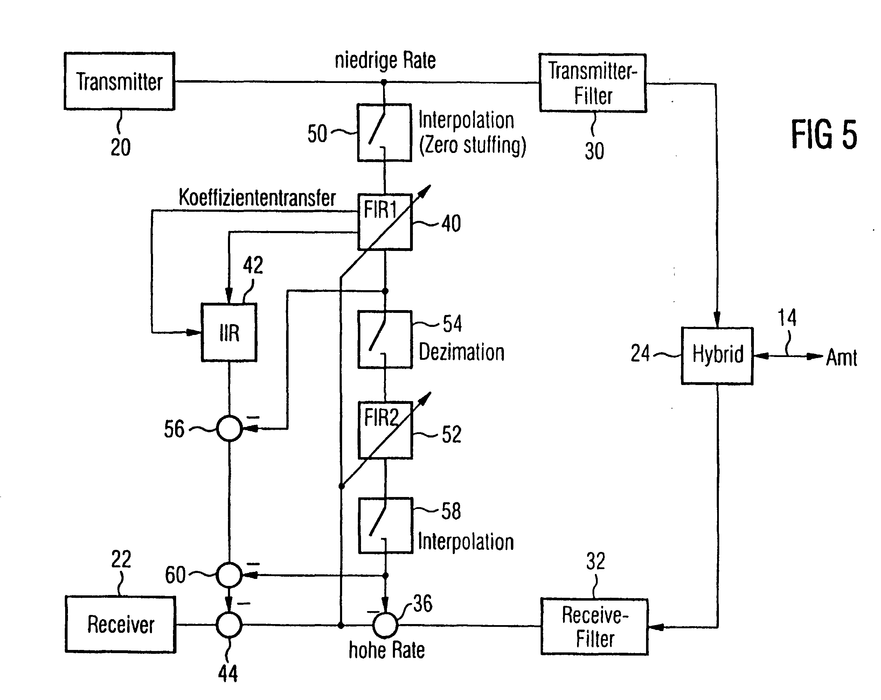

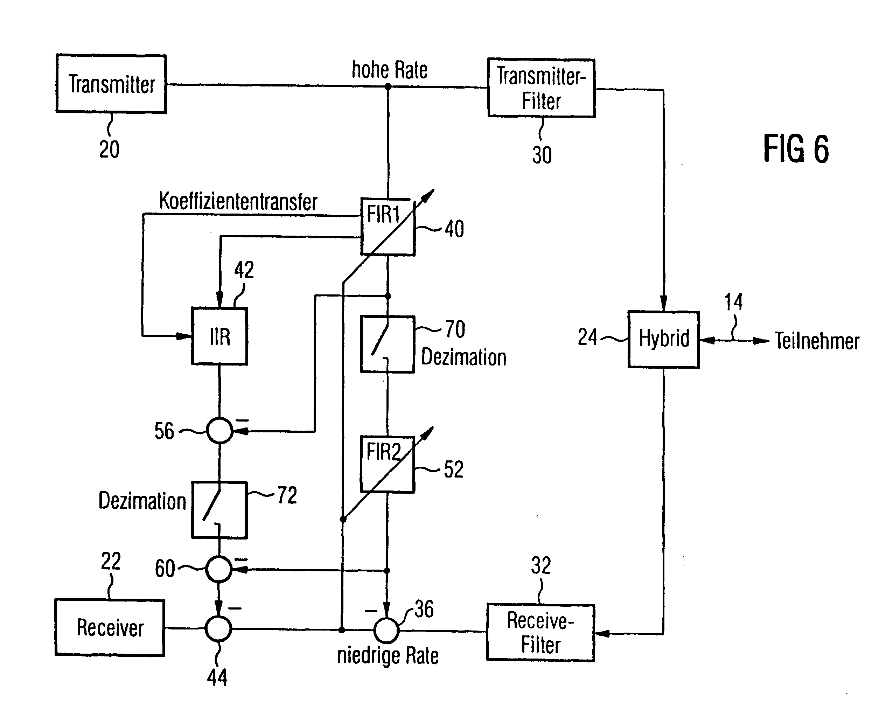

Erfindungsgemäß kann auch diese Vorgehensweise stark vereinfacht werden. Die entsprechenden Schaltungen sind in den Figuren 5 und 6 dargestellt. Figur 5 zeigt dabei die "Teilnehmer"-Seite, beispielsweise bei ADSL, in der mit niedriger Rate gesendet und mit hoher Rate empfangen wird. Auch hier ist wieder ein Sender (transmitter) 20 vorgesehen, der über einen Sendefilter (transmitter filter) 30 mit der Gabelschaltung (hybrid) 24 verbunden ist, an der die Zweidrahtleitung 14 zum Amt angeschlossen ist. Die über die Zweidrahtleitung 14 vom Amt ankommenden Signale werden über die Gabelschaltung 24 dem Empfängerfilter (receive filter) 32 zugeleitet und von dort nach Subtraktion der entsprechenden Echowerte dem Empfänger (receiver) 22 zugeführt. Empfängerfilter 32 und Empfänger 22 arbeiten dabei mit der hohen Datenrate, Sender 20 und Senderfilter 30 mit der niedrigen Datenrate.

Die Echoimpulsantwort wird hier durch die Serienschaltung zweier verkürzter FIR- und eines rekursiven IIR-Filter niedriger Ordnung nachgebildet. Das erste FIR-Filter 40 wird mit der hohen Abtastfrequenz betrieben, wozu die Interpolationsstufe 50 benötigt wird. Das zweite FIR-Filter 52 arbeitet auf der niedrigen Abtastfrequenz, die durch die Dezimationsstufe 54 hergestellt wird, wodurch sich ein sehr günstiges Konvergenzverhalten ergibt. Das IIR-Filter 42 wird mit der höheren Abtastfrequenz betrieben und die Koeffizienten werden wie im Hinblick auf Figuren 3 und 4 beschrieben, ermittelt.

Im folgenden wird die erfindungsgemäße Kompensation des Upstream-Echos auf der Teilnehmerseite beispielsweise eines ADSL-Systems, in dem mit einer niedrigen Rate gesendet und mit einer hohen Rate empfangen wird, anhand der Figur 5 im einzelnen erläutert. Das vom Sender 20 mit niedriger Rate ausgesendete Signal wird zur Echokompensation der Interpolationsstufe 50 zugeführt, die ein entsprechendes Zero-Stuffing durchführt. Das entsprechend aufgeweitete Signal wird dem ersten FIR-Filter 40 zugeführt, dessen Koeffizienten beispielsweise mittels des Gradienten-Algorithmus bestimmt werden. Ein Ausgangssignal dieses ersten FIR-Filters 40 wird, wie auch in Fig. 3 dargestellt, dem IIR-Filter 42 zugeführt. Die Koeffizienten des IIR-Filters 42 werden ebenfalls wie in Fig. 3 und 4 dargestellt, anhand der Koeffizenten des ersten FIR-Filters 40 bestimmt. Dies ist in Fig. 5 durch den fettgedruckten Pfeil "Koeffiziententransfer" dargestellt. Das Ausgangssignal des ersten FIR-Filters 40 wird weiter dem negativen Eingang eines Summationspunktes 56 zugeführt, dessen positiver Eingang mit dem Ausgang des IIR-Filters 42 verbunden ist.

Weiter ist der Ausgang des FIR-Filters 40 mit einer Dezimationsvorrichtung 54 verbunden, die dafür sorgt, dass das zweite FIR-Filter 52 auf der niedrigeren Abtastfrequenz des Senders arbeiten kann. Dementsprechend wird das Signal mit der herabgesetzten Frequenz dem zweiten FIR-Filter 52 zugeführt. Dessen Ausgangssignal muss dann natürlich im Wege einer weiteren Interpolation, die durch die Interpolationsvorrichtung 58 ausgeführt wird, auf die hier empfängerseitige hohe Datenrate umgesetzt werden. Der Ausgang der Interpolationsvorrichtung 58 ist dementsprechend mit dem negativen Eingang eines Summationspunktes 36 verbunden, dessen positiver Eingang mit dem Empfangsfilter 32 verbunden ist. Der Ausgang dieses Summationspunktes dient unter anderem zur Bestimmung der Koeffizienten der beiden FIR-Filter 40 und 52 (und damit indirekt über diese Koeffizienten auch zur Bestimmung der Koeffizienten des IIR-Filters 42).

Das Ausgangssignal der Interpolationsvorrichtung 58 wird zusätzlich dem negativen Eingang eines Summationspunktes 60 zugeführt, dessen positiver Eingang mit dem Ausgang des Summationspunktes 56 verbunden ist. Der Ausgang dieses Summationspunktes 60 ist mit dem negativen Eingang eines weiteren Summationspunktes 44 verbunden, dessen Ausgang mit dem Empfänger 22 und dessen positiver Eingang mit dem Ausgang des Summationspunktes 36 verbunden ist.

Auf der Amts- oder Zentralen Seite, die in Fig. 6 dargestellt ist, wird mit der hohen Datenrate gesendet und mit der niedrigen Datenrate empfangen. Diese Amtsseite umfasst ebenfalls wieder einen Sender (transmitter) 20 der über einen Sendefilter (transmitter filter) 30 mit der Gabelschaltung (hybrid) 24 verbunden ist, an die die Zweidrahtleitung 14 zum Teilnehmer angeschlossen ist. Die vom Teilnehmer an die Zweidrahtleitung 14 kommenden Signale werden von der Gabelschaltung 24 an den Empfangsfilter 32 und schließlich an den Empfänger 22 weitergeleitet. Auch hier ist eine besondere erfindungsgemäße Echokompensationsvorrichtung vorgesehen, die sich speziell für diesen Anwendungsfall der hohen Sendedatenrate und der niedrigen Empfangsdatenrate eignet. Auch diese Vorrichtung ist vorzugsweise für Datenübertragung nach dem ADSL-Standard vorgesehen.

Auch hier wird die Echoimpulsantwort wie in Figur 5 durch die Serienschaltung zweier verkürzter FIR- und eines rekursiven (IIR)-Filters niedriger Ordnung nachgebildet. Das erste FIR-Filter 40 wird ebenfalls mit der hohen Abtastfrequenz betrieben, die ja hier direkt vom Sender 20 übernommen werden kann. Das zweite FIR-Filter 52 arbeitet auf der niedrigen Abtastfrequenz der Empfängerseite. Zur Anpassung der Datenrate ist eine Dezimationsvorrichtung 70 zwischen den Ausgang des ersten FIR-Filters 40 und den Eingang des zweiten FIR-Filters 52 geschaltet. Ein weiterer Ausgang des FIR-Filters 40 ist wieder, wie in den Figuren 3 und 4 im einzelnen dargestellt, mit dem IIR-Filter 42 verbunden, dessen Koeffizienten wieder in Abhängigkeit von den Koeffizienten des ersten FIR-Filters 40 bestimmt werden. Dies ist auch hier durch den fetten Pfeil "Koeffiziententransfer" angedeutet. Das Ausgangssignal des ersten FIR-Filters 40 wird einerseits der Dezimationsvorrichtung 70 und von dieser dem zweiten FIR-Filter 52 zugeführt. Zusätzlich wird es dem negativen Eingang des Summationspunktes 56 zugeführt, dessen positiver Eingang wieder mit dem Ausgang des IIR-Filters 42 verbunden ist. Das Ausgangssignal des Summationspunktes 56 muß hier aber einer weiteren Dezimationsvorrichtung 72 zugeführt werden, um es auf die niedrige Datenrate der Empfangsseite herabzusetzen.

Das Ausgangssignal des zweiten FIR-Filters 52, welches sich hier ja bereits auf der empfängerseitigen niedrigen Datenrate befindet, wird wiederum dem negativen Eingang des Summationspunktes 36 zugeführt, dessen positiver Eingang mit dem Ausgang des Empfangsfilters 32 verbunden ist. Das Ausgangssignal dieses Summationspunktes dient wiederum dazu, die Koeffizienten der beiden FIR-Filter 40 und 52 zu bestimmen. Dies ist hier wiederum durch die Signallinie mit den Pfeilen über die Filter 40 und 52 angedeutet. Das Ausgangssignal des zweiten FIR-Filters wird zusätzlich noch dem negativen Eingang des auch hier vorhandenen Summationspunktes 60 zugeführt, dessen Ausgang mit dem negativen Eingang des Summationspunktes 44 verbunden ist. Der positive Eingang des Summationspunktes 44 ist mit dem Ausgang des Summationspunktes 36 verbunden, der Ausgang des Summationspunktes 44 ist mit dem Empfänger 22 verbunden. Zur entsprechenden Anpassung der Datenrate ist zwischen dem Ausgang des Summationspunktes 56 und dem Eingang des Summationspunktes 60 noch eine weitere Dezimationsvorrichtung 72 geschaltet. Durch die Dezimationsvorrichtung 70 wird erreicht, dass das zweite FIR-Filter 52 auf der niedrigen Abtastfrequenz des Empfängers arbeitet. Dadurch ergibt sich ein sehr günstiges Konvergenzverhalten. Das IIR-Filter 42 wird mit der höheren Abtastfrequenz der Senderseite betrieben. Konvergenzprobleme, die bei der Adaption eines rekursiven (IIR)-Filters mittels Gradientenalgorithmus auftreten, werden durch diese Schaltungsanordnung umgangen, da die Koeffizienten des IIR-Filters aus den Koeffizienten des ersten FIR-Filters 40 ermittelt werden. Die Art der Ermittlung entspricht der Beschreibung der Fig. 3 und 4. Im übrigen können die Koeffizienten des IIR-Filters aus den Koeffizienten des ersten FIR-Filters 40 entweder wie beschrieben analytisch oder iterativ (zum Beispiel ebenfalls durch Anwendung des Gradientenalgorithmus) berechnet werden. Weiter ist auch eine Optimierung der Koeffizienten des IIR-Filters 42 durch Verwendung einer erhöhten Anzahl von Filterkoeffizienten in dem ersten FIR-Filter 40 möglich.

Insbesondere bei Anwendungen mit sehr unterschiedlicher Sende- und Empfangsdatenrate, wie beispielsweise dem ADSL-Standard, kann mit der vorliegenden Erfindung eine ganz wesentliche Vereinfachung der Filterstrukturen der Echokompensation und der Echokompensationsverfahren erzielt werden. Dabei wird auch noch ein sehr günstiges Konvergenzverhalten bei der Adaption der Echokompensationsfilter erzielt.

## Patentansprüche

1. Vorrichtung zur Echokompensation auf Teilnehmerseite bei Gleichlage-Übertragungsverfahren im Duplex-Betrieb über eine Zweidrahtleitung (14) mit:
(a) einem Sender (20), der ein Sendesignal mit einer niedrigen Datenübertragungsrate sendet;
(b) einer ersten Interpolationsvorrichtung (50), die das Sendesignal interpoliert;
(c) einem ersten FIR-Filter (40) mit einstellbaren Filterkoeffizienten, das das durch die erste Interpolationsvorrichtung (50) interpolierte Sendesignal filtert;
(d) einem IIR-Filter (42) mit einstellbaren Filterkoeffizienten, wobei ein Ausgang des ersten FIR-Filters (40) mit dem Eingang des IIR-Filters (42) verbunden ist;
(e) einer Berechnungseinrichtung zur Berechnung der Filterkoeffizienten des IIR-Filters (42) in Abhängigkeit von den Filterkoeffizienten des ersten FIR-Filters (40);
(f) einer Einstelleinrichtung zur Einstellung des IIR-Filters (42) entsprechend den berechneten Filterkoeffizienten; und mit
(g) einem zweiten FIR-Filter (52), das eingangsseitig mit dem Ausgang des ersten FIR-Filters (40) über eine erste Dezimationsvorrichtung (54) verbunden ist und das ausgangsseitig über eine zweite Interpolationsvorrichtung (58), die zur Umsetzung auf eine hohe Datenübertragungsrate eines durch einen Empfänger (22) empfangenen Empfangssignals vorgesehen ist, an einen negativen Eingang eines ersten Summationspunktes (36) angeschlossen ist, wobei an dessen positiven Eingang das Empfangssignal anliegt,
(h) wobei der Ausgang des IIR-Filters (42) mit einem positiven Eingang eines zweiten Summationspunktes (56) verbunden ist, dessen negativer Eingang an den Ausgang des ersten FIR-Filters (40) angeschlossen ist und dessen Ausgang mit einem positiven Eingang eines dritten Summationspunktes (60) verbunden ist,
wobei einem negativen Eingang des dritten Summationspunktes (60) das Ausgangssignal der zweiten Interpolationsvorrichtung (58) zugeführt wird und ein Ausgang des dritten Summationspunktes (60) mit einem negativen Eingang eines vierten Summationspunktes (44) verbunden ist, dessen positiver Eingang mit dem Ausgang des ersten Summationspunktes (36) und dessen Ausgang mit dem Empfänger (22) verbunden ist.

2. Vorrichtung zur Echokompensation auf Amtsseite bei Gleichlage-Übertragungsverfahren im Duplex-Betrieb über eine Zweidrahtleitung (14) mit:
(a) einem Sender (20), der ein Sendesignal mit einer hohen Datenübertragungsrate sendet;
(b) einem ersten FIR-Filter (40) mit einstellbaren Filterkoeffizienten, das das Sendesignal filtert;
(c) einem IIR-Filter (42) mit einstellbaren Filterkoeffizienten, wobei ein Ausgang des ersten FIR-Filters (40) mit dem Eingang des IIR-Filters (42) verbunden ist;
(d) einer Berechnungseinrichtung zur Berechnung des Filterkoeffizienten des IIR-Filters (42) in Abhängigkeit von den Filterkoeffizienten des ersten FIR-Filters (40);
(e) einer Einstelleinrichtung zur Einstellung des IIR-Filters (42) entsprechend den berechneten Filterkoeffizienten; und mit
(f) einem zweiten FIR-Filter (52), das eingangsseitig mit dem ersten FIR-Filter (40) über eine erste Dezimationsvorrichtung (70) verbunden ist und das ausgangsseitig an einen negativen Eingang eines ersten Summationspunktes (36) angeschossen ist, wobei an einem positiven Eingang des ersten Summationspunktes (36) ein Empfangssignal für einen Empfänger (22) anliegt, wobei das Empfangssignal eine niedrige Datenübertragungsrate aufweist;
(g) wobei der Ausgang des ersten FIR-Filters (40) an einen negativen Eingang eines zweiten Summationspunktes (56) angeschlossen ist, dessen positiver Eingang mit dem Ausgang des IIR-Filters (42) verbunden ist und dessen Ausgang über eine zweite Dezimationsvorrichtung (72), die zur Umsetzung auf die niedrige Datenübertragungsrate des Empfangssignals vorgesehen ist, an einen dritten Summationspunkt (60) angeschlossen ist, dessen negativer Eingang mit dem Ausgang des zweiten FIR-Filters (52) verbunden ist und dessen Ausgang mit einem negativen Eingang eines vierten Summationspunktes (44) verbunden ist, dessen positiver Eingang an den Ausgang des ersten Summationspunktes (36) angeschlossen ist und dessen Ausgang mit dem Empfänger (22) verbunden ist.

## Claims

1. Device for echo compensation at the subscriber end with a full duplex transmission method over a two-wire line (14) having:
(a) a transmitter (20) which transmits a transmission signal at a low data transmission rate,
(b) a first interpolation device (50) which interpolates the transmission signal,
(c) a first FIR filter (40) with adjustable filter coefficients, which filters the transmission signal which has been interpolated by the first interpolation device (50),
(d) an IIR filter (42) with adjustable filter coefficients, wherein one output of the first FIR filter (40) is connected to the input of the IIR filter (42),
(e) a calculation device for calculating the filter coefficients of the IIR filter (42) as a function of the filter coefficients of the first FIR filter (40),
(f) a setting device for setting the IIR filter (42) in accordance with the calculated filter coefficients, and having
(g) a second FIR filter (52) which is connected at the input end to the output of the first FIR filter (40), via a first decimation device (54) and which is connected to a negative input of a first summing point (36) at the output end via a second interpolation device (58) which is provided for conversion to a high data transmission rate of a reception signal which is received by a receiver (22), wherein the reception signal is present at its positive input,
(h) wherein the output of the IIR filter (42) is connected to a positive input of a second summing point (56) whose negative input is connected to the output of the first FIR filter (40) and whose output is connected to a positive input of a third summing point (60),
wherein the output signal of the second interpolation device (58) is fed to a negative input of the third summing point (60) and an output of the third summing point (60) is connected to a negative input of a fourth summing point (44) whose positive input is connected to the output of the first summing point (36) and whose output is connected to the receiver (22).

2. Device for echo compensation at the exchange end with a full duplex transmission method over a two-wire line (14), having:
(a) a transmitter (20) which transmits a transmission signal at a high data transmission rate,
(b) a first FIR filter (40) with adjustable filter coefficients, which filters the transmission signal,
(c) an IIR filter (42) with adjustable filter coefficients, wherein an output of the first FIR filter (40) is connected to the input of the IIR filter (42),
(d) a calculation device for calculating the filter coefficients of the IIR filter (42) as a function of the filter coefficients of the first FIR filter (40),
(e) a setting device for setting the IIR filter (42) in accordance with the calculated filter coefficients, and having
(f) a second FIR filter (52) which is connected at the input end to the first FIR filter (40) via a first decimation device (70) and which is connected at the output end to a negative input of a first summing point (36), wherein a reception signal for a receiver (22) is present at a positive input of the first summing point (36), wherein the reception signal has a low data transmission rate,
(g) wherein the output of the first FIR filter (40) is connected to a negative input of a second summing point (56) whose positive input is connected to the output of the IIR filter (42) and whose output is connected via a second decimation device (72), which is provided for conversion to the low data transmission rate of the reception signal, to a third summing point (60) whose negative input is connected to the output of the second FIR filter (52) and whose output is connected to a negative input of a fourth summing point (44) whose positive input is connected to the output of the first summing point (36) and whose output is connected to the receiver (22).

## Revendications

1. Dispositif de compensation d'écho, côté utilisateur, dans des procédés de transmission sur fréquence commune en mode duplex sur une ligne à deux fils (14) comprenant :
(a) un émetteur (20) qui envoie un signal d'émission avec un bas débit de transmission des données ;
(b) un premier dispositif d'interpolation (50) qui interpole le signal d'émission ;
(c) un premier filtre FIR (40) avec des coefficients de filtre réglables qui filtre le signal d'émission interpolé par le premier dispositif d'interpolation (50) ;
(d) un filtre IIR (42) avec des coefficients de filtre réglables, une sortie du premier filtre FIR (40) étant reliée avec l'entrée du filtre IIR (42) ;
(e) un dispositif de calcul pour le calcul des coefficients de filtre du filtre IIR (42) en fonction des coefficients de filtre du premier filtre FIR (40) ;
(f) un dispositif de réglage pour le réglage du filtre IIR (42) selon les coefficients de filtre calculés ; et comprenant
(g) un deuxième filtre FIR (52) qui est relié du côté de l'entrée avec la sortie du premier filtre FIR (40) via un premier dispositif de décimation (54) et qui via un deuxième dispositif d'interpolation (58), prévu pour obtenir un haut débit de transmission des données pour un signal de réception reçu par un récepteur (22), est raccordé du côté de la sortie à une entrée négative d'un premier point de sommation (36) le signal de réception étant appliqué à l'entrée positive de celui-ci,
(h) dans lequel la sortie du filtre IIR (42) est reliée avec une entrée positive d'un deuxième point de sommation (56), dont l'entrée négative est raccordée à la sortie du premier filtre FIR (40) et la sortie est reliée avec une entrée positive d'un troisième point de sommation (60),
le signal de sortie du deuxième dispositif d'interpolation (58) étant envoyé à une entrée négative du troisième point de sommation (60) et une sortie du troisième point de sommation (60) étant reliée avec une entrée négative d'un quatrième point de sommation (44), dont l'entrée positive est reliée avec la sortie du premier point de sommation (36) et la sortie est reliée avec le récepteur (22).

2. Dispositif de compensation d'écho, côté opérateur, dans des procédés de transmission sur fréquence commune en mode duplex sur une ligne à deux fils (14) comprenant :
(a) un émetteur (20) qui envoie un signal d'émission avec un haut débit de transmission des données ;
(b) un premier filtre FIR (40) avec des coefficients de filtre réglables qui filtre le signal d'émission ;
(c) un filtre IIR (42) avec des coefficients de filtre réglables, une sortie du premier filtre FIR (40) étant reliée avec l'entrée du filtre IIR (42) ;
(d) un dispositif de calcul pour le calcul des coefficients de filtre du filtre IIR (42) en fonction des coefficients de filtre du premier filtre FIR (40) ;
(e) un dispositif de réglage pour le réglage du filtre IIR (42) selon les coefficients de filtre calculés ; et comprenant
(f) un deuxième filtre FIR (52) qui est relié du côté de l'entrée avec le premier filtre FIR (40) via un premier dispositif de décimation (70) et qui est raccordé du côté de la sortie à une entrée négative d'un premier point de sommation (36), un signal de réception pour un récepteur (22) étant appliqué à une entrée positive du premier point de sommation (36), le signal de réception ayant un bas débit de transmission des données ;
(g) dans lequel la sortie du premier filtre FIR (40) est raccordée à une entrée négative d'un deuxième point de sommation (56), dont l'entrée positive est reliée à la sortie du filtre IIR (42) et la sortie est raccordée à un troisième point de sommation (60) via un deuxième dispositif de décimation (72), prévu pour obtenir le bas débit de transmission des données du signal de réception, l'entrée négative du troisième point de sommation (60) étant reliée avec la sortie du deuxième filtre FIR (52) et sa sortie avec une entrée négative d'un quatrième point de sommation (44), dont l'entrée positive est raccordée à la sortie du premier point de sommation (36) et la sortie est reliée avec le récepteur (22).
